# DEMANDE DE BREVET EUROPEEN

(11) **EP 2 397 846 A1**
(43) Date de publication de la demande: **21.12.2011**
(21) Numéro de dépôt: 11170421.9
(22) Date de dépôt: 17.06.2011
(51) Int. Cl.: G01N 21/90, B65G 47/244

(54) **Procédé de contrôle optique automatisé de décor et dispositif de contrôle optique automatisé correspondant**

(30) Priorité: 18.06.2010 FR 1002592
(71) Demandeur: SGD S.A., 92800 Puteaux (FR)
(72) Inventeur: Merour, Philippe, 27740 Poses (FR)
(74) Mandataire: Martin, Didier Roland Valéry

(57) **Abrégé**

- Procédé de contrôle optique automatisé de décor et dispositif de contrôle optique automatisé correspondant.
- L'invention concerne un procédé de contrôle optique automatisé d'un flacon (1) délimité par une paroi (4), ledit flacon (1) étant pourvu d'un décor (6) dans et/ou sur ladite paroi (4), ledit procédé étant caractérisé en ce qu'il comprend :
- une étape d'approvisionnement au cours de laquelle le flacon (1) est acheminé à un poste de contrôle optique (8), dans une position d'acheminement aléatoire,
- une étape d'alignement dudit flacon (1) au cours de laquelle on corrige la position dudit flacon (1), de manière à faire passer ledit flacon (1) de la position d'acheminement à une position d'inspection prédéterminée par rapport à un organe de contrôle optique (10),
- une étape de contrôle optique dudit décor (6) au cours de laquelle le décor (6) est inspecté par l'organe de contrôle optique (10), tandis que flacon (1) se trouve dans sa position d'inspection.

- Domaine du contrôle optique de flacons.

## Description

La présente invention se rapporte au domaine technique et général du contrôle optique des motifs d'un flacon, en particulier du décor apposé sur et/ou dans la paroi d'un flacon.

La présente invention concerne plus précisément un procédé de contrôle optique automatisé d'un flacon s'étendant entre un fond et un col selon un axe d'extension (XX') et délimité par une paroi dont au moins une partie dite *« partie de forme »* ne présente pas de géométrie de révolution autour de l'axe (XX'), ledit flacon étant pourvu d'au moins un décor dans et/ou sur ladite paroi.

La présente invention concerne également un dispositif de contrôle optique automatisé d'un flacon s'étendant entre un fond et un col selon un axe d'extension (XX') et délimité par une paroi dont au moins une partie dite « *partie de forme »* ne présente pas de géométrie de révolution autour de l'axe (XX'), ledit flacon étant pourvu d'au moins un décor dans et/ou sur ladite paroi.

Il est connu d'appliquer un décor sur un récipient de type flacon, en verre ou en autre matériau, tels que par exemple les flacons destinés au conditionnement alimentaire ou cosmétique. En général, le décor est apposé sur une partie de la paroi du flacon, par exemple par collage, sérigraphie, gravure, laser, ..., dans un but esthétique et/ou informatif. Il est en outre possible que le décor fasse partie intégrante de la paroi elle-même, c'est-à-dire qu'il soit introduit dans les différentes couches formant la paroi ou pris en masse avec cette dernière au cours de la fabrication du flacon.

Dans le cas des flacons en verre, le décor est souvent apposé sur la paroi extérieure du flacon par sérigraphie à l'aide d'une machine à sérigraphier comprenant plusieurs postes de décor. Cette machine comporte souvent différents emplacements dont chacun est occupé par un flacon maintenu en position, l'ensemble formant une sorte de *« carrousel »* tournant, dans lequel chaque flacon passe d'un poste à l'autre. A chaque poste, le flacon reçoit une couleur et sa position peut être modifiée, de manière à pouvoir décorer toute la surface de flacon souhaitée.

Une fois décoré, les flacons doivent être contrôlés pour garantir la qualité du décor. Jusqu'à présent, cette étape de contrôle était réalisée à l'oeil nu par une personne spécialisée chargée de l'inspection des décors. En effet, la sensibilité intrinsèque du contrôle optique, en raison de nombreux paramètres très variables, tels que le matériau constitutif du flacon, la forme de celui-ci, la nature et le motif du décor, ainsi que les conditions d'éclairage, constituait un obstacle majeur à l'automatisation de telles opérations d'inspection.

Malgré cela, il a pu être parfois envisagé d'intégrer des moyens de contrôle automatisés au sein même de la machine de type *« carrousel »* dans laquelle sont réalisés les décors.

Toutefois en raison de la nécessité de faire cohabiter alors dans un espace restreint à la fois des organes de décoration et des organes de contrôle, les conditions d'inspection ne sont généralement pas satisfaisantes, et les contrôles s'avèrent être applicables uniquement à un type de flacon bien spécifique.

En outre, en faisant dépendre la cadence de décoration de la cadence du poste de contrôle, et réciproquement, on tend à limiter la productivité de l'ensemble, et à augmenter les risques de défaillances. En effet, dans cette machine, le contrôle des flacons se fait en temps masqué et immobilise au moins un poste de sérigraphie, ce qui, dans certaines conditions, peut limiter les possibilités de sérigraphie voire le contrôle lui-même.

De surcroît, ces moyens de contrôle automatisés ne sont pas adaptés à tous les types de décors, notamment lorsque ces derniers sont présents sur plusieurs faces ou côtés d'un même flacon. Dans ces deux cas, le fait qu'au moins un poste de sérigraphie soit occupé pour le contrôle optique limite encore la vitesse de décoration des flacons.

Les objets assignés à la présente invention visent en conséquence à remédier aux différents inconvénients énumérés précédemment, et à proposer un nouveau procédé de contrôle optique automatisé d'un flacon qui permette un contrôle du décor efficace, fiable et rapide.

Un autre objet de l'invention vise à proposer un nouveau procédé de contrôle optique automatisé d'un flacon facilement automatisable et reproductible.

Un autre objet de l'invention vise à proposer un nouveau procédé de contrôle optique automatisé d'un flacon qui s'appuie sur des étapes simples, facilement reproductibles et mettant en oeuvre des mécanismes simples.

Un autre objet de l'invention vise à proposer un nouveau procédé de contrôle optique automatisé d'un flacon garantissant un contrôle optique précis et adapté pour tout type de décor.

Un autre objet de l'invention vise à proposer un nouveau dispositif de contrôle optique automatisé d'un flacon qui permette un contrôle du décor efficace, fiable et rapide.

Un autre objet de l'invention vise à proposer un nouveau dispositif de contrôle optique automatisé d'un flacon qui permette un contrôle du décor reproductible et adapté à tout type de décor.

Un autre objet de l'invention vise à proposer un nouveau dispositif de contrôle optique automatisé d'un flacon qui mette en oeuvre des pièces mécaniques simples, faciles d'utilisation et facilement industrialisables.

Un autre objet de l'invention vise à proposer un nouveau dispositif de contrôle optique automatisé d'un flacon qui garantisse un contrôle optique précis et reproductible.

Les objets assignés à la présente invention sont atteints à l'aide d'un procédé de contrôle optique automatisé d'un flacon s'étendant entre un fond et un col selon un axe d'extension (XX') et délimité par une paroi dont au moins une partie dite *« partie de forme »* ne présente pas de géométrie de révolution autour de l'axe (XX'), ledit flacon étant pourvu d'au moins un décor dans et/ou sur ladite paroi, ledit procédé étant caractérisé en ce qu'il comprend :
- une étape d'approvisionnement au cours de laquelle le flacon portant ledit décor est acheminé selon une première direction à un poste de contrôle optique, dans une position d'acheminement aléatoire,
- une étape d'alignement dudit flacon au cours de laquelle on corrige la position dudit flacon, de manière à faire passer ledit flacon de la position d'acheminement aléatoire à une position d'inspection prédéterminée par rapport à un organe de contrôle optique,
- une étape de contrôle optique dudit décor au cours de laquelle le décor est inspecté par l'organe de contrôle optique, tandis que flacon se trouve dans sa position d'inspection prédéterminée.

Les objets assignés à l'invention sont également atteints à l'aide d'un dispositif de contrôle optique automatisé d'un flacon s'étendant entre un fond et un col selon un axe d'extension (XX') et délimité par une paroi dont au moins une partie dite *« partie de forme »* ne présente pas de géométrie de révolution autour de l'axe (XX'), ledit flacon étant pourvu d'au moins un décor dans et/ou sur ladite paroi, ledit dispositif étant caractérisé en ce qu'il comprend :
- un moyen convoyage du flacon portant ledit décor à un poste de contrôle optique, ledit flacon étant dans une position d'acheminement aléatoire,
- un organe d'alignement dudit flacon conçu pour corriger la position dudit flacon, de manière à faire passer ledit flacon de la position d'acheminement aléatoire à une position d'inspection prédéterminée par rapport à un organe de contrôle optique,
- un organe de contrôle optique conçu pour inspecter le décor du flacon qui se trouve dans sa position d'inspection prédéterminée.

D'autres objets et avantages de l'invention apparaîtront mieux à la lecture de la description ci-après, ainsi qu'à l'aide des dessins annexés, donnés à titre purement illustratif et non limitatif, dans lesquels:
- La figure 1 illustre, de façon schématique, un moyen de convoyage conforme à la présente invention sur lequel des flacons positionnés de manière aléatoire, sont déplacés.
- La figure 2 illustre, selon une vue de dessus, deux mors conformes à la présente invention.
- La figure 3 illustre, selon une vue de dessous, les mors de la figure 2.
- La figure 4 illustre, de façon schématique en perspective, un dispositif de contrôle optique comprenant deux mors en position ouverte et un flacon déposé sur un moyen de convoyage, conformément à l'invention.
- La figure 5 illustre, de façon schématique en perspective, le dispositif de contrôle optique de la figure 4 dans lequel les mors sont en position fermée autour du flacon, conformément à l'invention.
- La figure 6 illustre le plan bidimensionnel (X₁, Y₁) du flacon et celui (X₂, Y₂) du dispositif de contrôle optique de l'invention.
- La figure 7 illustre, selon une vue schématique partielle de dessus, une étape d'alignement du flacon à l'aide de deux mors, conformément à la présente invention.
- La figure 8 illustre, selon une vue schématique partielle de dessus, les mors de la figure 7 en position rapprochée autour du flacon.
- La figure 9 illustre de façon schématique un poste de contrôle optique d'un flacon, au niveau duquel la lumière est diffusée à partir de deux dômes réfléchissant.
- La figure 10 illustre de façon schématique un poste de contrôle optique d'un flacon, au niveau duquel la lumière est diffusée à partir d'une source lumineuse.
- La figure 11 illustre, de façon schématique en vue de dessus, un mors positionné contre un flacon.
- La figure 12 illustre, de façon schématique selon une vue de face, un mode de réalisation particulier d'un poste de contrôle optique d'un flacon comprenant deux mors en position rapprochée autour du flacon.
- La figure 13 illustre, de façon schématique, une coupe du poste de contrôle optique du flacon selon la ligne A-A de la figure 12.

La présente invention concerne un procédé de contrôle optique automatisé d'un flacon 1 s'étendant entre un fond 2 formant le culot dudit flacon 1 et un col 3 selon un axe d'extension (XX') et délimité par une paroi 4. On entend par procédé de contrôle optique un procédé destiné à inspecter, vérifier et/ou examiner un flacon 1, au moyen de la vision. Il s'agit d'un procédé de contrôle automatisé capable de réaliser un contrôle optique de manière automatique, reproductible et qui limite les interventions humaines.

Le flacon 1 est avantageusement un flacon fabriqué en verre, en plastique ou dans un autre matériau. Le flacon 1 est par exemple destiné à un usage alimentaire, cosmétique et/ou industriel, ou peut servir de contenant quelconque. De manière particulièrement avantageuse, le flacon 1 est en verre et destiné à contenir un parfum corporel.

La paroi 4 du flacon 1 comprend au moins une partie dite « *partie de forme »* 4A qui ne présente pas de géométrie de révolution autour de l'axe (XX'), c'est-à-dire dont la section transversale n'est pas de forme circulaire. En d'autres termes, le flacon 1 de l'invention est composé d'un col 3, qui peut s'apparenté à un goulot, et d'un corps 5, dont au moins une partie n'est pas à géométrie de révolution, c'est-à-dire qui est à géométrie de forme. Il peut s'agir par exemple d'un flacon 1 dont une section transversale du corps 5 est sensiblement rectangulaire, tel qu'illustré 1, 4 et 5, ou carrée ou en forme de losange. Alternativement toute autre forme du flacon 1 qui ne serait pas à géométrie de révolution pourrait être envisagée.

Dans la présente invention, le flacon 1 est pourvu d'au moins un décor 6 dans et/ou sur ladite paroi 4, c'est-à-dire qu'il comprend au moins un motif, principalement pour un objectif esthétique ou informatif (par exemple sous forme de mentions légales), apposé sur et/ou dans au moins une partie de sa paroi 4. Le décor 6 peut correspondre à tout type d'ornement, d'inscription, de parure et/ou d'embellissement, ajouté(e) à la paroi 4 sur sa surface ou dans sa masse, par exemple lors de la fabrication du flacon 1 ou au cours d'une étape de décoration postérieure à la fabrication dudit flacon 1.

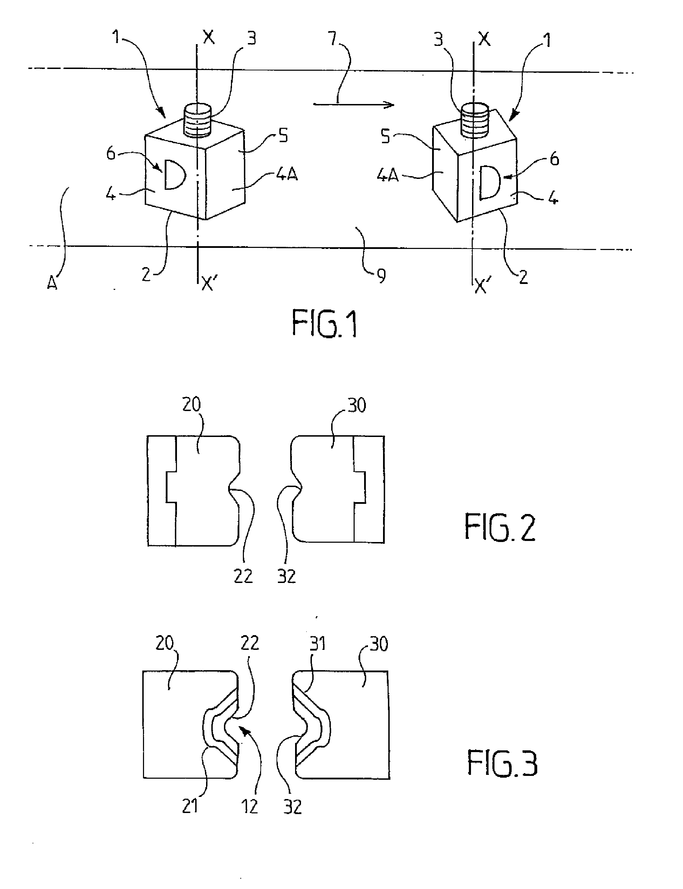

De manière préférée, le flacon 1 a fait l'objet d'une étape de décoration A, par exemple par sérigraphie, laquelle est réalisée en amont du contrôle optique. Ainsi, le procédé de contrôle de l'invention s'intègre préférentiellement dans un procédé global de décoration de flacons, par exemple un procédé de décoration par sérigraphie de flacons 1 en verre de section quelconque, par exemple de section géométrique sensiblement arrondie, rectangulaire ou carrée au niveau du corps 5 (cf. figures 1, 4 et 5), au cours duquel les flacons 1 subissent en amont du contrôle optique au moins une étape de décoration A et en aval du contrôle optique au moins une étape de cuisson ou de séchage B. En d'autres termes, le procédé de contrôle optique du flacon 1 est mis avantageusement en oeuvre de manière distincte et séparée de l'étape de décoration du flacon 1, c'est-à-dire que l'étape de contrôle optique est indépendante de celle de décoration. Le flacon 1 est en effet avantageusement libérer ou lâcher après sa décoration, le contrôle optique intervenant après l'étape de décoration du flacon 1.

Ainsi, le procédé de la présente invention comprend une étape d'approvisionnement au cours de laquelle le flacon 1 portant ledit décor 6 est acheminé selon une première direction 7 à un poste de contrôle optique 8, dans une position d'acheminement aléatoire. Au cours de l'étape d'approvisionnement, le flacon 1 est déplacé librement, sans moyen de retenue ou de fixation, sur un moyen de convoyage, par exemple un convoyeur 9 tel qu'illustré aux figures 1, 4 et 5. De préférence, au cours de l'étape d'acheminement, on pose le flacon 1, après sa décoration, en appui libre sur le convoyeur 9, dans une position qui est susceptible de varier d'un flacon 1 à l'autre préférentiellement d'un angle α sensiblement inférieur ou égal à 20° dans le repère (X₁, Y₁). En effet, tous les flacons 1 sont préférentiellement déposés toujours de la même façon par la machine de décor (étape A) sur le convoyeur 9, avec cependant une variation possible d'environ 20° par rapport au repère (X₂, Y₂) du convoyeur 9, ce qui rend le positionnement du flacon 1 aléatoire.

La position d'acheminement dudit flacon 1 est donc préférentiellement non déterminée et non définie, c'est-à-dire non prédictible, puisque le flacon 1 est déposé sur son fond 2 de manière aléatoire et indéterminée sur ledit convoyeur 9.

Le procédé de l'invention comprend également une étape d'alignement dudit flacon 1 au cours de laquelle on corrige la position dudit flacon 1, de manière à faire passer ledit flacon 1 de la position d'acheminement aléatoire à une position d'inspection prédéterminée par rapport à un organe de contrôle optique 10, présent au niveau du poste de contrôle optique 8. Cette étape d'alignement consiste avantageusement à positionner ou disposer dans la position d'inspection automatiquement, de manière précise et reproductible, tout flacon 1 acheminé par le convoyeur 9. De préférence, la position d'inspection prédéterminée correspond à une position dans laquelle le flacon 1 doit se trouver pour garantir un contrôle optimal de son décor, par exemple dans une position sensiblement en face de l'organe de contrôle optique 10.

De manière avantageuse, au cours de l'étape d'alignement on force le positionnement du flacon 1 dans la position d'inspection, à l'aide d'au moins un premier et un deuxième mors 20, 30 qui viennent coopérer avec le flacon 1. Les deux mors 20, 30 forment de préférence des mâchoires de serrage d'une pince conçues pour aligner ledit flacon 1 pour le contrôle du décor 6 (cf. figures 2 à 5).

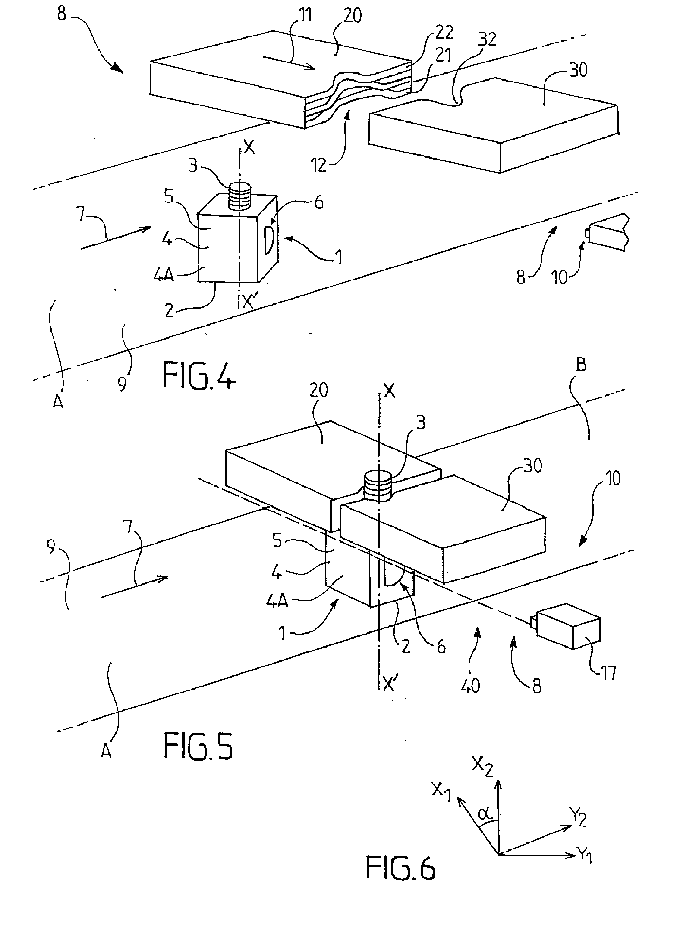

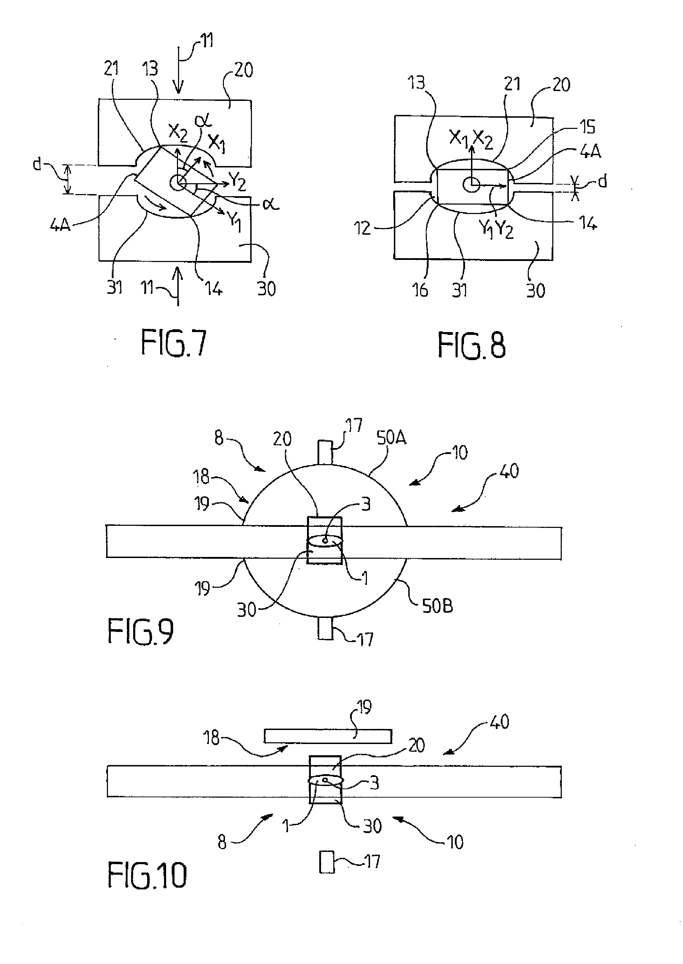

De préférence, l'alignement consiste à ajuster le repère (X₁, Y₁) du flacon 1 avec le repère (X₂, Y₂) de l'organe de contrôle optique 10, de telle sorte que le contrôle optique s'effectue après un positionnement déterminé du flacon 1. Tel que cela est représenté aux figures 6, 7 et 8, l'alignement du flacon 1 qui se trouve dans une position indéfinie consiste donc à faire pivoter ledit flacon 1, de préférence à plat sur ledit convoyeur 9 ou parallèlement à ce dernier, afin que son repère (X₁, Y₁) soit confondu avec celui (X₂, Y₂) de l'organe de contrôle 10, ici constitué en partie par les mors 20, 30. Il s'agit notamment d'une orientation azimutale du flacon 1, d'un angle α (cf. figures 6 et 7) par pivotement de ce dernier, afin d'assurer la superposition des repères de l'organe de contrôle 10 et du flacon 1. De préférence, au cours de l'étape d'alignement la valeur de l'angle α, initialement sensiblement comprise entre 1 et 90°, de préférence sensiblement comprise entre 15 et 45°, avantageusement sensiblement égale à 20°, est réduite à une valeur nulle (cf. figures 7 et 8).

Dans un mode de réalisation avantageux, l'alignement se fait à l'aide d'un organe d'alignement qui comprend au moins ledit premier et ledit deuxième mors 20, 30 conçus pour se rapprocher l'un contre l'autre afin de provoquer l'alignement du flacon 1 par pivotement latéral de ce dernier et éventuellement par translation de manière à mettre ledit flacon 1 dans l'axe desdits mors 20, 30. En d'autres termes, le mouvement de rapprochement desdits mors 20, 30 entraîne l'alignement du flacon 1 lorsque lesdits mors 20, 30 entrent en contact avec le flacon 1 et le contraignent à s'orienter selon leur repère (X₂, Y₂). Ainsi, au cours de ce rapprochement desdits mors 20, 30, la distance d (cf. figures 7 et 8) qui sépare lesdits mors 20, 30 se réduit.

Préférentiellement, lesdits premier et deuxième mors 20, 30 se rapprochent en translation, selon une deuxième direction 11, indiquée par une flèche 11 aux figures 4 et 7, sensiblement distincte de la première direction 7 suivie par le flacon 1 lorsqu'il est acheminé jusqu'au poste de contrôle optique 8, de manière à entrer en interaction avec ledit flacon 1. Ainsi, de manière préférée, lesdits mors 20, 30 sont symétriques par rapport à l'axe d'extension (XX') et mobiles en translation. De préférence, les mors 20, 30 se rejoignent lors d'un déplacement selon la direction 11 sensiblement parallèle au convoyeur 9, et avantageusement sensiblement perpendiculaire à la première direction 7 du convoyeur 9.

De manière avantageuse, au cours de l'étape d'alignement, on engage au moins une portion de la partie de forme 4A du flacon 1 en appui glissant contre une première rampe 21, 31 ménagée dans au moins l'un desdits mors 20, 30, de manière à modifier la position dudit flacon 1 et amener ce dernier dans la position d'inspection. Tel que cela est illustré aux figures, la première rampe 21, 31 consiste avantageusement en un renfoncement, telle qu'une empreinte profilée dans ledit mors 20, 30, avec lequel la partie de forme 4A du flacon 1 coopère et entre en contact afin d'orienter le flacon 1.

Dans un mode de réalisation particulièrement avantageux, au moins l'un desdits mors 20, 30 comprend au moins ladite première rampe 21, 31 de forme sensiblement concave et globalement incurvée conçue pour coopérer par appui glissant avec au moins une portion de la partie de forme 4A dudit flacon 1, afin d'entraîner et de guider le flacon 1 par pivotement, tel que cela a été décrit précédemment.

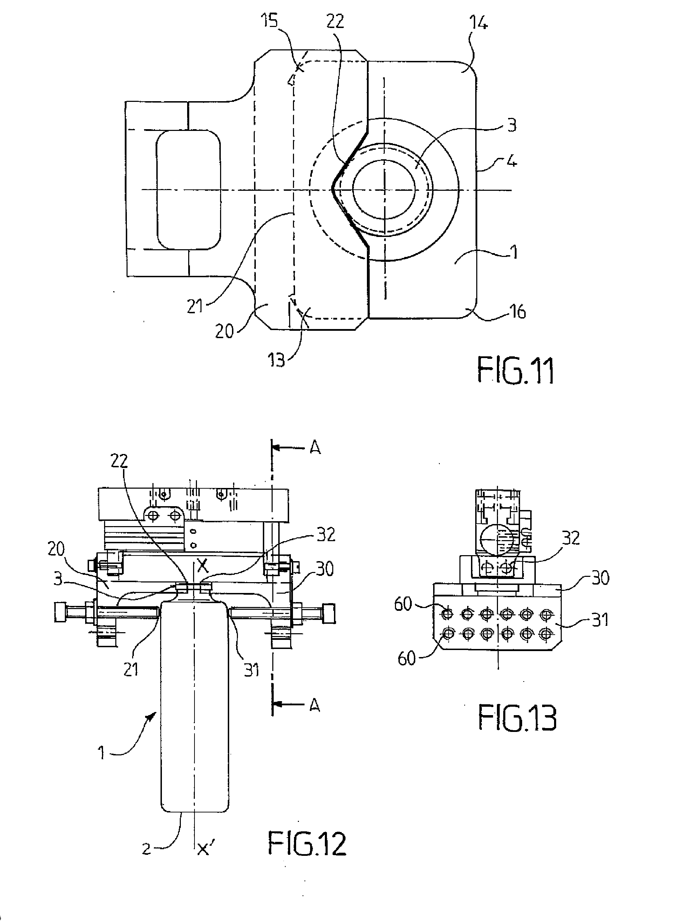

En d'autres termes, au moins l'un desdits mors 20, 30, de préférence les deux mors 20, 30, comprend une première rampe 21, 31 formant préférentiellement un premier renfoncement, de forme sensiblement arrondie, incurvée ou courbée, dans ledit mors 20, 30. Cette première rampe 21, 31 est préférentiellement conçue pour entrer en contact avec au moins une portion de la partie de forme 4A, afin qu'au moins deux angles du flacon 1 (cf. figures 7, 8 et 11), de préférence quatre angles 13, 14, 15, 16 par exemple si la partie de forme 4A a une section transversale en forme de rectangle, de carré ou de losange, soient ajustés ou calés de manière stable dans une empreinte 12 formée par lesdites premières rampes 21, 31 lorsque lesdits mors 20, 30 sont rapprochés l'un de l'autre. Il est également parfaitement envisageable que la première rampe 21, 31 présente avantageusement une forme sensiblement plane ou plate, telle qu'illustrée à la figure 11.

De préférence, la forme et les dimensions desdites premières rampes 21, 31 sont complémentaires de celles de la partie de forme 4A, afin que lesdites premières rampes 21, 31 épousent le contour de la partie de forme 4A et assure ainsi un alignement stable dudit flacon 1, sans masquer le décor 6, lorsque les mors 20, 30 se referment autour du flacon 1. Ainsi, les dimensions des mors 20, 30, en particulier de leur première rampe 21, 31, sont adaptées aux dimensions de la partie de forme 4A.

Toutefois, de manière alternative et sans sortir du cadre de la présente invention, il est également parfaitement envisageable que ladite première rampe 21, 31 n'ait avantageusement pas une forme sensiblement complémentaire de la partie de forme 4A du flacon 1 et qu'elle n'ait qu'un rôle d'appui glissant sur ladite partie de forme 4A pour orienter le flacon 1.

Ainsi, de manière avantageuse, au cours de l'étape d'acheminement, on pose le flacon 1 en appui libre sur un convoyeur 9, on saisit et on aligne ledit flacon 1 à la volée, à l'aide des mors 20, 30, sans interrompre le déplacement du convoyeur 9. En d'autres termes, l'étape d'alignement du flacon 1 se fait avantageusement sans stopper le convoyeur 9 et sans dissimuler le décor 6.

Avantageusement, et sans sortir du cadre la présente invention, il est également possible que le procédé de l'invention comprenne une étape de pré-alignement du flacon 1, qui se déroule préalablement à l'étape d'alignement dudit flacon 1. De préférence, cette étape de pré-alignement consiste à réduire la valeur de l'angle α, en particulier lorsque ce dernier présente une valeur initiale sensiblement supérieure à 90°. L'étape de pré-alignement est avantageusement réalisée à l'aide d'un organe de pré-alignement (non représenté) consistant avantageusement en une pince ouverte de chaque côté et formée par deux barres formant branches de la pince disposées au-dessus du convoyeur 9, sensiblement parallèlement à ce dernier, entre lesquelles le flacon 1 est guidé et pré-aligné. Dans ce mode de réalisation particulier, l'étape de pré-alignement est suivie de l'étape d'alignement conformément à celle susvisée.

Dans un mode de réalisation particulièrement avantageux, le procédé de contrôle optique de l'invention comprend, postérieurement à l'étape d'alignement, une étape de maintien dudit flacon 1 dans la position d'inspection, au cours de laquelle lesdits premier et deuxième mors 20, 30 continuent leur rapprochement jusqu'à immobiliser ledit flacon 1 en position d'inspection. Au cours de cette étape de maintien, la distance d qui sépare les mors 20, 30 est faible voire sensiblement nulle (cf. figures 7 et 8).

Au cours de l'étape de maintien on enserre le col 3 du flacon 1 par appui dudit col 3 contre une deuxième rampe 22, 32 ménagée dans au moins l'un desdits mors 20, 30 (cf. figure 11). En d'autres termes, au moins l'un desdits mors 20, 30, de préférence les deux mors 20, 30, est pourvu d'une deuxième rampe 22, 32 de forme générale sensiblement identique à celle de la première rampe 21, 31, c'est-à-dire que la deuxième rampe 22, 32 forme également une sorte de renfoncement dans ledit mors 20,30. De préférence, les dimensions de la deuxième rampe 22, 32 sont toutefois sensiblement inférieures à celles de la première rampe 21, 31, de manière à pouvoir entrer en contact avec le goulot 3 du flacon 1.

De préférence, au moins l'un desdits mors 20, 30 comprend donc au moins ladite deuxième rampe 22, 32 concave globalement incurvée conçue pour participer à l'immobilisation dudit flacon 1 en position d'inspection par appui du col 3 dudit flacon 1 contre la deuxième rampe 22, 32. En d'autres termes, ladite deuxième rampe 22, 32 coopère avec le flacon 1, de préférence avec le goulot 3 de ce dernier, afin d'assurer un blocage dudit flacon 1 en position d'inspection tout en assurant la visibilité du décor 6. Alternativement, la deuxième rampe 22, 32 comprend une forme de renfoncement sensiblement triangulaire, telle que représentée à la figure 11, pour permettre le calage et le maintien du goulot 3 dudit flacon 1.

Ainsi, l'étape de maintien permet avantageusement de maintenir immobile dans sa position d'inspection ledit flacon 1, grâce à l'intervention de la deuxième rampe 22, 32 qui vient entourer fermement ledit goulot 3, sans masquer le décor 6. En d'autres termes, cette étape assure un blocage ou un serrage en position d'inspection du flacon 1.

Alternativement ou de manière complémentaire à ce qui précède, il est également parfaitement envisageable que la deuxième rampe 22, 32 agisse parallèlement à l'étape d'alignement avec ladite première rampe 21, 31, en centrant le flacon 1 dans l'axe desdits mors 20, 30 grâce à une action de la deuxième rampe 22, 32 sur le goulot 3. En d'autres termes, la deuxième rampe 22, 32, notamment grâce à la mise en contact de son renfoncement sensiblement triangulaire (cf. figure 11) avec ledit col 3, permet avantageusement d'impartir audit flacon 1 un mouvement en translation pour centrer ce dernier dans l'axe desdits mors 20, 30 et faciliter son alignement ultérieur pour le contrôle optique. De préférence, cette étape de pré-centrage réalisée par la deuxième rampe 22, 32 se fait sensiblement simultanément à l'étape d'alignement en rotation azimutale dudit flacon 1 par la première rampe 21, 31.

Dans ce mode de réalisation particulièrement avantageux, le flacon 1 entre préférentiellement d'abord en contact avec la deuxième rampe 22, 32, au niveau de son goulot 3, et cette dernière va permettre de centrer par translation ledit flacon 1, afin de remettre le flacon 1 dans l'axe desdits mors 20, 30. En d'autres termes, la deuxième rampe 22, 32 est conçue pour opérer préférentiellement un pré-centrage dudit flacon 1, notamment quand l'angle α a une valeur sensiblement supérieure à 20°, de préférence sensiblement supérieure à 45° ou quand le flacon 1 n'est pas dans l'axe des mors 20, 30. Par exemple, la deuxième rampe 22, 32 participe activement à l'alignement dudit flacon 1, en particulier lorsque ce dernier présente une forme sensiblement plate ou légèrement bombée.

Dans ce mode de réalisation particulier, la deuxième rampe 22, 32 a donc avantageusement une première action de pré-centrage du flacon 1 puis une deuxième action de maintien dudit flacon 1 dans sa position d'inspection. Alternativement, tout autre moyen de centrage en translation dudit flacon 1 sur le convoyeur 9 est envisageable.

Ainsi, lesdites première et deuxième rampes 21, 31, 22, 32 ont avantageusement une action complémentaire pour permettre à la fois l'alignement dudit flacon 1 et son maintien stable dans la position d'inspection connue et préalablement définie, de préférence sans arrêt du convoyeur 9. Lesdites rampes 21, 31, 22, 32 permettent de maintenir en position le flacon 1 sans masquer le décor 6 qui est préférentiellement parfaitement visible en-dessous des mors 20, 30.

La première rampe 21, 31 joue donc préférentiellement un rôle dans l'orientation et le maintien dudit flacon 1 dans sa position déterminée pour le contrôle optique, tandis que la deuxième rampe 22, 32 est préférentiellement destinée selon la forme dudit flacon 1 à pré-centrer le flacon 1 dans l'axe desdits mors 20, 30 et/ou à maintenir ledit flacon 1. Alternativement, tout autre moyen de centrage en translation dudit flacon 1 sur le convoyeur 9 est envisageable.

Dans un mode de réalisation préféré décrit précédemment lesdites première et deuxième rampes 21, 31, 22, 32 ayant une forme sensiblement arrondie sont réalisées d'un seul tenant. Il est également parfaitement envisageable que lesdites première et deuxième rampes 21, 31, 22, 32 soient constituées de plusieurs segments dont l'orientation garantit une forme globalement arrondie desdites rampes 21, 31, 22, 32.

En outre, dans un mode de réalisation alternatif, au moins l'une desdites rampes 21, 31, 22, 32 desdits premier et deuxième mors 20, 30 comprend au moins deux doigts 60, de préférence une pluralité de doigts 60, s'étendant en direction du flacon 1 et conçus pour permettre une orientation et un maintien dudit flacon 1 quelque soit la forme de ce dernier. De manière avantageuse, chaque rampe 20, 30 comprend une pluralité de doigts 60 conçus pour épouser la forme dudit flacon 1, de manière à l'orienter puis à le maintenir en position d'inspection (cf. figures 12 et 13). En particulier, dans ce mode de réalisation, le flacon 1, quelle que soit sa forme, s'appuie contre lesdits doigts des mors 20, 30 qui l'orientent par appui.

Dans un mode de réalisation particulièrement avantageux, lesdites première et deuxième rampes 21, 31, 22, 32 sont étagées le long de l'axe d'extension (XX') du flacon 1, c'est-à-dire que chacune desdites première et deuxièmes rampes 21, 31, 22, 32 des mors 20, 30 sont sensiblement superposées de manière sensiblement parallèle l'une à l'autre dans lesdits mors 20, 30. De préférence, lesdites rampes 21, 31, 22, 32 s'étendent dans un plan sensiblement parallèle au plan du convoyeur 9.

De manière avantageuse, lesdites première et deuxième rampes 21, 31, 22, 32 délimitent l'empreinte 12 en forme de gradins adaptée à la saisie du flacon 1 par le col 3 de ce dernier. Le nombre et la forme desdites rampes 20, 30 dépendent directement des dimensions du flacon 1, en particulier de sa forme, de manière à pouvoir assurer son alignement et son maintien. Ainsi, il est également parfaitement envisageable, sans sortir du cadre de la présente invention, que les mors 20, 30 comportent un nombre supérieur de rampes, par exemple trois ou quatre rampes, conformes à celles précédemment exposées, étagées selon l'axe (XX').

En outre, il est également possible, sans sortir du cadre de la présente invention, que l'étagement desdites rampes 20, 30 permettent un alignement différentiel dudit flacon 1, avec par exemple un pré-centrage réalisé par la deuxième rampe 22, 32 autour du col 3 puis un alignement réalisé par la première rampe 21, 31 qui vient sensiblement contre au moins une partie du corps 5 dudit flacon 1.

Dans le mode de réalisation dans lequel lesdits mors 20, 30 comprennent des doigts 60, il est par ailleurs envisageable que lesdits doigts 60 soient étagés selon l'axe (XX'), de manière à épouser parfaitement les contours dudit flacon 1, en particulier son col 3 et une partie de son corps 5, afin de s'adapter à toute forme de flacon 1 et former un organe d'alignement et de blocage « *universel* ».

Ainsi, l'agencement particulier des mors 20, 30, comprenant lesdites rampes 21, 31, 22, 32, sous forme de mâchoires avec des empreintes profilées capables de coopérer avec la paroi de forme 4A du flacon 1, permet avantageusement l'alignement et le blocage du flacon 1 dans une position d'inspection, chacune desdites rampes 21, 31, 22, 32 pouvant à la fois contribuer au pré-centrage, à l'orientation et au blocage dudit flacon 1.

Les étapes d'alignement et de maintien précédemment décrites présentent donc l'intérêt d'être réalisées indépendamment de l'étape de décoration et après cette dernière, ce qui évite les pertes de temps pendant la décoration. Ces étapes permettent également de saisir le flacon 1 à la volée sur ledit convoyeur 9, tandis que le convoyeur 9 continue d'avancer. En outre, elles permettent, grâce à l'agencement particulier de l'organe d'alignement comprenant les mors 20, 30 formant un outil de préhension, d'alignement et de maintien du flacon 1, d'obtenir un positionnement prédéterminé, fixe, fiable et reproductible du flacon 1. Cet organe d'alignement et de maintien permet de surcroît de dégager toutes les faces du flacon 1, à savoir notamment la ou les face(s) porteuse(s) du motif 6, de manière à permettre un contrôle optique facilité et optimal. L'alignement du flacon 1 avec le procédé de l'invention permet avantageusement de rendre accessible, de manière reproductible, à l'inspection tout décor 6.

Le procédé de contrôle optique automatisé de l'invention comprend par ailleurs une étape de contrôle optique dudit décor 6, au cours de laquelle le décor 6 est inspecté par l'organe de contrôle optique 10, tandis que flacon 1 se trouve dans sa position d'inspection prédéterminée. Ainsi, cette étape de contrôle optique est réalisée avantageusement après les étapes d'alignement et de maintien dudit flacon 1 précitées, et donc avantageusement après l'étape de décoration dudit flacon 1. Cette étape consiste à contrôler le décor 6 apposé dans et/ou sur ledit flacon 1, de manière à détecter la moindre anomalie et pouvoir ensuite déclasser ledit flacon 1 si nécessaire.

De préférence, au cours de l'étape de contrôle optique, on éclaire au moins une partie du décor 6, et on acquiert au moins une image du décor 6, à l'aide d'un moyen d'acquisition d'images de type caméra 17. De manière préférée, l'organe de contrôle optique 10 comprend avantageusement au moins une caméra 17 de capture d'images associée à un système d'éclairage 18 conçu pour éclairer le décor.

L'organe de contrôle optique 10 est donc avantageusement conçu pour permettre à la fois d'éclairer le flacon 1, en particulier le décor 6, et de prendre des images dudit décor 6, afin de les analyser et d'en déduire la qualité du décor 6.

De manière avantageuse, au moins une source lumineuse 19 du système d'éclairage 18 émet un faisceau lumineux en direction du flacon 1, de préférence en direction d'un dôme réfléchissant 50A, 50B qui permet de réfléchir la lumière, en particulier lorsque ledit flacon 1 est opaque. Par ailleurs, ladite au moins une caméra 17 acquiert préférentiellement des images du décor 6 du flacon 1, lequel est maintenu immobile, par lesdits mors 20, 30, dans le champ du faisceau lumineux, entre la source lumineuse 19 et la caméra 17.

En effet, dans le mode de réalisation illustré à la figure 9, le flacon 1 est avantageusement opaque et le système d'éclairage 18 comprend au moins deux sources lumineuses 19, par exemple un système de diodes qui émettent de la lumière à travers une fente (non représentées), en direction de deux dômes réfléchissant 50A, 50B situés de part et d'autre dudit flacon 1 (cf. figure 9). Les dômes 50A, 50B forment un dôme diffusant de lumière capable d'éclairer parfaitement toutes les faces du flacon 1, afin de procéder à un contrôle optimal du décor 6 de ce dernier. De préférence, le premier dôme 50A est éclairé et la caméra 17 située derrière ce premier dôme 50A prend une image du flacon 1 à travers une fente réalisée dans l'axe du dôme 50A. Ensuite, le deuxième dôme 50B est éclairé et une autre caméra 17 située du même côté que le deuxième dôme 50B, de préférence derrière ce dernier, acquiert des images du décor 6 du flacon 1 à travers une fente réalisée dans l'axe dudit deuxième dôme 50B. Selon le positionnement du décor 6 sur le flacon 1, les dômes 50A, 50B sont allumés successivement ou simultanément.

Ainsi, le flacon 1 est maintenu immobile par lesdits mors 20, 30 dans le champ du faisceau lumineux, entre la source lumineuse 19 et la caméra 17, ici de préférence entre les dômes réfléchissant 50A, 50B, deux caméras 17 étant fixées respectivement de part et d'autre des dômes réfléchissant 50A, 50B. Dans ce cas, il peut s'agir par exemple d'un flacon opaque, par exemple laqué, en verre noir ou de couleur foncée, en verre opale, en verre transparent dépoli, ...etc., comprenant au moins un motif sur chacune de ses faces opposées. Ainsi, les deux caméras 17 prennent préférentiellement des images des deux faces opposées dudit flacon 1.

La figure 10 illustre, quant à elle, le cas du contrôle optique d'un flacon 1 transparent, coloré ou non, comprenant un décor sur seulement une de ces faces. Dans ce cas de figure, le flacon 1 est immobilisé devant un système d'éclairage 18 de type « *back lighf diffusant»,* une seule caméra 17 étant alors positionnée à l'opposé du système d'éclairage 18, le flacon 1 se trouvant entre le système d'éclairage 18 et la caméra 17. Ce type d'éclairage dit *« back light diffusant »* peut également être utilisé pour le contrôle optique d'un flacon 1 transparent comprenant un motif sur plusieurs faces, dans la mesure où les motifs sont décalés verticalement ou horizontalement, c'est-à-dire qu'il n'y a pas de zone de chevauchement des motifs dans le faisceau lumineux.

Bien évidemment, ce procédé de contrôle optique est adapté pour tout autre type de motifs, quelque soit son positionnement sur le flacon 1, dans la mesure où il est possible d'adapter le système d'éclairage 18, le nombre et l'orientation des caméras 17. Il est également parfaitement envisageable, sans sortir du cadre de la présente invention, que les caméras 17 et/ou le système d'éclairage 18 soi(en)t mobile(s) de part et d'autre du flacon 1 maintenu dans sa position d'inspection. En outre, il est également possible d'utiliser des moyens pour cacher au moins en partie la source lumineuse, afin de mieux distinguer et contrôler certains décors.

Ainsi, au cours de l'étape de contrôle optique, une ou plusieurs images du décor 6 du flacon 1, coté recto et/ou verso de ce dernier, sont prises. Dès que les images du décor 6 ont été prises, le flacon 1 est relâché sur le convoyeur 9 par lesdits mors 20, 30 qui se remettent en position pour aligner et maintenir un nouveau flacon 1 qui arrive sur ledit convoyeur 9. Après le relâchement du flacon 1 sur le convoyeur 9, le procédé de contrôle optique comprend une étape de traitement des images recueillies par les caméras 17, de manière à déterminer si le flacon 1 sera rebuté ou rejeté au cours d'une étape ultérieure de rejet réalisée par un système d'éjection, localisée en aval du poste de contrôle optique 8.

Dès lors, le procédé de contrôle optique de l'invention permet une prise d'images et un traitement de ces dernières, en temps masqué, de manière à garantir un contrôle optique économe en temps.

L'étape de traitement des images se fait par l'intermédiaire d'un logiciel classique de comparaison d'images qui fonctionne selon un principe de comparaison avec un modèle et comprend les sous-étapes suivantes :
- une sous-étape de formatage au cours de laquelle on apprend à l'organe de contrôle optique 10 ce qu'est un décor 6 dit « *acceptable »* ou *« bon* », en lui présentant un ou plusieurs modèles de décor 6 « *acceptable »* ou *« bon »* et en construisant une image « *modèle »* de celui-ci,
- une sous-étape de comparaison, au cours de laquelle on soustrait une image prise du décor 6 par ladite au moins une caméra 17 à l'image *« modèle ».* Cette soustraction permet de mettre en évidence les écarts entre le décor 6 à contrôler et l'image « *modèle* ». L'image des écarts est analysée, notamment en fonction de différents paramètres tels que par exemple la surface totale des écarts, de manière à définir si le décor 6 contrôlé peut être considéré comme « *acceptable »* ou « *bon »* ou au contraire comme *« mauvais* ».

Cette étape de traitement des images prises des décors impose nécessairement que les flacons 1 se trouvent toujours dans une position extrêmement reproductible et fiable lors de la prise de l'image de leur décor 6, de manière à éviter que la sous-étape de comparaison révèle majoritairement des écarts dus à des effets de perspective générés par les différences de positionnement des flacons 1 lors des différentes prises d'images.

Les flacons 1 qui se déplacent dans une position aléatoire sur le convoyeur 9 en sortie de l'étape de décoration A ont des positions beaucoup trop variables pour que l'on puisse effectuer un contrôle de leur décor 6 selon le principe décrit précédemment, sans les avoir préalablement alignés et maintenus dans la position prédéterminée.

Dès lors, le procédé de contrôle optique de l'invention garantit, par ses étapes d'alignement et de maintien du flacon 1 réalisées préalablement au traitement des images, une étape de traitement des images fiable et efficace, sans risque d'écarts significatifs liés à des problèmes de reproductibilité du positionnement du flacon 1 dans sa position d'inspection.

Par ailleurs, le présent procédé de contrôle optique présente l'intérêt de limiter les pertes de temps induites par le contrôle du décor, notamment grâce à la séparation des étapes de décoration et de contrôle. En outre, ce procédé permet un contrôle efficace, fiable, reproductible et automatisable grâce à l'organe de contrôle optique qui permet d'aligner et de maintenir le décor 6 dans le champ de la caméra 17 pour une prise d'images et un contrôle optique optimaux du décor 6.

La présente invention concerne également en tant que tel un dispositif de contrôle optique 40 automatisé d'un flacon 1 s'étendant entre un fond 2 et un col 4 selon un axe d'extension (XX') et délimité par une paroi 4 dont au moins une partie dite « *partie de forme »* 4A ne présente pas de géométrie de révolution autour de l'axe (XX'). Le flacon 1 est pourvu d'au moins un décor 6 dans et/ou sur ladite paroi 4 et ledit dispositif 40 comprend :
- un moyen convoyage 9 du flacon 1 portant ledit décor 6 à un poste de contrôle optique 8, ledit flacon 1 étant dans une position d'acheminement aléatoire,
- un organe d'alignement dudit flacon 1 conçu pour corriger la position dudit flacon 1, de manière à faire passer ledit flacon 1 de la position d'acheminement aléatoire à une position d'inspection prédéterminée par rapport à un organe de contrôle optique 10,
- un organe de contrôle optique 10 conçu pour inspecter le décor 6 du flacon 1 qui se trouve dans sa position d'inspection prédéterminée.

De manière avantageuse, le moyen de convoyage 9, l'organe d'alignement comprenant au moins deux mors 20, 30 et l'organe de contrôle optique 10 sont sensiblement conformes à ceux précédemment évoqués.

En particulier, l'organe d'alignement dudit dispositif 40 comprend avantageusement lesdits au moins un premier et un deuxième mors 20, 30, avantageusement sensiblement identiques à ceux précédemment décrits, conçus pour se rapprocher l'un contre l'autre afin de provoquer l'alignement du flacon 1 par pivotement latéral de ce dernier.

De préférence, au moins l'un desdits mors 20, 30 comprend au moins une première rampe 21, 31 de forme sensiblement concave et globalement incurvée conçue pour coopérer par appui glissant avec au moins une portion de la partie de forme 4A dudit flacon 1, afin d'entraîner et de guider le flacon 1 par pivotement, tel qu'expliqué dans ce qui précède.

De manière avantageuse, au moins l'un desdits mors comprend au moins une deuxième rampe 22, 32 concave globalement incurvée conçue pour participer à l'immobilisation dudit flacon 1 en position d'inspection par appui du col 3 dudit flacon 1 contre la deuxième rampe 22, 32, lesdites rampes 21, 31, 22, 32 étant étagées le long de l'axe d'extension (XX').

De manière préférée, au moins l'une desdites première et deuxième rampes 21, 31, 22, 32 desdits premier et deuxième mors 20, 30 comprend au moins deux doigts 60, de préférence une pluralité de doigts 60, s'étendant en direction du flacon 1 et conçus pour permettre une orientation et un maintien dudit flacon 1 quelque soit la forme de ce dernier, comme précédemment exposé. De préférence, lesdites première et deuxième rampes 21, 31, 22, 32 délimitent une empreinte en forme de gradins adaptée à la saisie du flacon 1 par le col 3 de ce dernier. En outre, lesdits mors 20, 30 sont symétriques par rapport à l'axe d'extension (XX') et mobiles en translation, tel que précédemment décrit.

Enfin, l'organe de contrôle optique 10 comprend au moins une caméra 17 de capture d'images associée à un système d'éclairage 18 conçu pour éclairer le décor 6.

Le dispositif de contrôle optique 40 de la présente invention garantit les même avantages que le procédé de contrôle optique précédemment décrit, dans la mesure où il permet la mise en oeuvre du procédé optique de l'invention. En d'autres termes, ce dispositif 40 permet un alignement optimal, fiable et reproductible du flacon 1, sensiblement en face de l'organe de contrôle optique 10, de manière à permettre un contrôle fiable et reproductible du décor 6 dudit flacon 1. Il permet en outre un gain de temps au niveau du poste de décor et une grande qualité du contrôle du décor 6, quels que soient la nature et le positionnement du décor 6 sur le flacon 1.

## Revendications

1. Procédé de contrôle optique automatisé d'un flacon (1) s'étendant entre un fond (2) et un col (3) selon un axe d'extension (XX') et délimité par une paroi (4) dont au moins une partie dite *« partie de forme »* (4A) ne présente pas de géométrie de révolution autour de l'axe (XX'), ledit flacon (1) étant pourvu d'au moins un décor (6) dans et/ou sur ladite paroi (4), ledit procédé étant **caractérisé en ce qu'**il comprend :
- une étape d'approvisionnement au cours de laquelle le flacon (1) portant ledit décor (6) est acheminé selon une première direction (7) à un poste de contrôle optique (8), dans une position d'acheminement aléatoire,
- une étape d'alignement dudit flacon (1) au cours de laquelle on corrige la position dudit flacon (1), de manière à faire passer ledit flacon (1) de la position d'acheminement aléatoire à une position d'inspection prédéterminée par rapport à un organe de contrôle optique (10),
- une étape de contrôle optique dudit décor (6) au cours de laquelle le décor (6) est inspecté par l'organe de contrôle optique (10), tandis que flacon (1) se trouve dans sa position d'inspection prédéterminée.

2. Procédé de contrôle optique selon la revendication 1 **caractérisé en ce qu'**au cours de l'étape d'alignement on force le positionnement du flacon (1) dans la position d'inspection, à l'aide d'au moins un premier et un deuxième mors (20, 30) qui viennent coopérer avec le flacon (1).

3. Procédé de contrôle optique selon la revendication 2 **caractérisé en ce que** lesdits premier et deuxième mors (20, 30) se rapprochent en translation, selon une deuxième direction (11) sensiblement distincte de la première direction (7) suivie par le flacon (1) lorsqu'il est acheminé jusqu'au poste de contrôle optique (8), de manière à entrer en interaction avec ledit flacon (1).

4. Procédé de contrôle optique selon la revendication 2 ou 3 **caractérisé en ce qu'**au cours de l'étape d'alignement on engage au moins une portion de la partie de forme (4A) du flacon (1) en appui glissant contre une première rampe (21, 31) ménagée dans au moins l'un desdits mors (20, 30), de manière à modifier la position dudit flacon (1) et amener ce dernier dans la position d'inspection.

5. Procédé de contrôle optique selon l'une des revendications 2 à 4 **caractérisé en ce qu'**au cours de l'étape d'acheminement, on pose le flacon (1) en appui libre sur un convoyeur (9), et **en ce que** l'on saisit et on aligne ledit flacon (1) à la volée, à l'aide des mors (20, 30), sans interrompre le déplacement du convoyeur (9).

6. Procédé de contrôle optique selon l'une des revendications 2 à 5 **caractérisé en ce qu'**il comprend postérieurement à l'étape d'alignement une étape de maintien dudit flacon (1) dans la position d'inspection, au cours de laquelle lesdits premier et deuxième mors (20, 30) continuent leur rapprochement jusqu'à immobiliser ledit flacon (1) en position d'inspection.

7. Procédé de contrôle optique selon la revendication 6 **caractérisé en ce qu'**au cours de l'étape de maintien on enserre le col (3) du flacon (1) par appui dudit col (3) contre une deuxième rampe (22, 32) ménagée dans au moins l'un desdits mors (20, 30).

8. Procédé de contrôle optique selon l'une des revendications 1 à 7 **caractérisé en ce qu'**au cours de l'étape de contrôle optique, on éclaire au moins une partie du décor (6), et on acquiert au moins une image du décor (6), à l'aide d'un moyen d'acquisition d'images de type caméra (17).

9. Procédé de contrôle optique selon la revendication 7 ou 8 **caractérisé en ce qu'**au moins une source lumineuse (19) émet un faisceau lumineux en direction du flacon (1), et **en ce qu'**au moins une caméra (17) acquiert des images du décor (6) du flacon (1), lequel est maintenu immobile, par lesdits mors (20, 30), dans le champ du faisceau lumineux, entre la source lumineuse (19) et la caméra (17).

10. "Dispositif de contrôle optique automatisé (40) d'un flacon (1) s'étendant entre un fond (2) et un col (3) selon un axe d'extension (XX') et délimité par une paroi (4) dont au moins une partie dite « *partie de forme »* (4A) ne présente pas de géométrie de révolution autour de l'axe (XX'), ledit flacon (1) étant pourvu d'au moins un décor (6) dans et/ou sur ladite paroi (4), ledit dispositif (40) étant **caractérisé en ce qu'**il comprend :
- un moyen de convoyage (9) du flacon (1) portant ledit décor (6) à un poste de contrôle optique (8), ledit flacon (1) étant dans une position d'acheminement aléatoire,
- un organe d'alignement dudit flacon (1) conçu pour corriger la position dudit flacon (1), de manière à faire passer ledit flacon (1) de la position d'acheminement aléatoire à une position d'inspection prédéterminée par rapport à un organe de contrôle optique (10),
- un organe de contrôle optique (10) conçu pour inspecter le décor (6) du flacon (1) qui se trouve dans sa position d'inspection prédéterminée.

11. Dispositif de contrôle optique (40) selon la revendication 10 **caractérisé en ce que** l'organe d'alignement comprend au moins un premier et un deuxième mors (20, 30) conçus pour se rapprocher l'un contre l'autre afin de provoquer l'alignement du flacon (1) par pivotement latéral de ce dernier.

12. Dispositif de contrôle optique (40) selon la revendication 11 **caractérisé en ce qu'**au moins l'un desdits mors (20, 30) comprend au moins une première rampe (21, 31) de forme sensiblement concave et globalement incurvée conçue pour coopérer par appui glissant avec au moins une portion de la partie de forme (4A) dudit flacon (1), afin d'entraîner et de guider le flacon (1) par pivotement.

13. Dispositif de contrôle optique (40) selon la revendication 12 **caractérisé en ce qu'**au moins l'un desdits mors (20, 30) comprend au moins une deuxième rampe (22, 32) concave globalement incurvée conçue pour participer à l'immobilisation dudit flacon (1) en position d'inspection par appui du col (3) dudit flacon (1) contre la deuxième rampe (22, 32), lesdites rampes (21, 22, 31, 32) étant étagées le long de l'axe d'extension (XX').

14. Dispositif de contrôle optique (40) selon la revendication 13 **caractérisé en ce que**
lesdites première et deuxième rampes (21, 22, 31, 32) délimitent une empreinte (12) en forme de gradins adaptée à la saisie du flacon (1) par le col (3) de ce dernier.

15. Dispositif de contrôle optique (40) selon les revendications 12 et 13, ou 14 **caractérisé en ce qu'**au moins l'une desdites première et deuxième rampes (21, 31, 22, 32) desdits premier et deuxième mors (20, 30) comprend au moins deux doigts (60) s'étendant en direction du flacon (1) et conçus pour permettre une orientation et un maintien dudit flacon (1) quelque soit la forme de ce dernier.

16. Dispositif de contrôle optique (40) selon l'une des revendications 12 à 15 **caractérisé en ce que** lesdits mors (20, 30) sont symétriques par rapport à l'axe d'extension (XX') et mobiles en translation.

17. Dispositif de contrôle optique (40) selon l'une des revendications 11 à 16
**caractérisé en ce que** l'organe de contrôle optique (10) comprend au moins une caméra (17) de capture d'images associée à un système d'éclairage (18) conçu pour éclairer le décor (6).
